# EUROPEAN PATENT APPLICATION

(11) **EP 3 035 552 A1**
(43) Date of publication of application: **22.06.2016**
(21) Application number: 14460107.7
(22) Date of filing: 15.12.2014
(51) Int. Cl.: H04B 5/00, G06K 7/10, G06K 19/07

(54) **METHOD FOR CONFIGURATION OF AN ELECTRICAL DEVICE USING A MOBILE DEVICE**

(71) Applicant: ABB Technology AG, 8050 Zürich (CH)
(72) Inventor: Plesnar, Jacek, 30-419 Krakow (PL); Lewandowski, Daniel, 30-384 Krakow (PL); Mueller, Peter, 69221 Dossenheim (DE)
(74) Representative: Chochorowska-Winiarska, Krystyna

(57) **Abstract**

The present invention relates to a method of configuring an electrical device (30) using a mobile device (20) placed close to the electrical device (30). The method according to the present invention is characterised in that the electrical device (30) is equipped with an NFC tag device (10) that contains defined configuration data (CD) of the electrical device (30). An NFC reader/writer module (21) in the mobile device (20) is then activated and the NFC reader/writer module (21) is used to load configuration data (CD) from the NFC tag device (10) into the processing module (22) of the mobile device (20). The read configuration data set (CD) is then modified, depending on the user's needs, in the processing module (22) in order to obtain an updated configuration data set (CD'), and then the mobile device (20) is used to establish signal communication with the electrical device (30) and to send the updated configuration data set (CD') from the processing module (22) to the configuration module (32) of the electrical device (30). The electrical device (30) is configured based on the updated configuration data set (CD').

## Description

The present invention relates to a method for configuring electrical devices using a mobile device which may be used in industrial plants equipped with configurable electrical devices, and in particular industrial automation devices.

### BACKGROUND OF THE INVENTION

Industrial plants use a number of industrial automation devices that are equipped with systems designed to configure them, to modify their operating parameters, control their settings, etc. Each of such devices may be configured in a specific way, varying from configurations of other devices of the same type installed in the factory.

If a large number of industrial automation devices are installed, configuration data of all those devices must be stored in an external, central database. Each device may have a specific unique configuration defined; therefore the database should associate each individual configuration with a specific device, e.g. using its serial number: Any modification of settings of a device entails the need to update information stored in the database. If a device breaks down or is replaced, the responsible engineer is expected to identify the configuration stored for the device in the database, import the configuration and record it on the new device.

There are known solutions that are designed to configure industrial equipment using a mobile device, e.g. a tablet computer. Such a device has a database with configurations stored in its memory or connects to an external wireless network and through the networks to a central database. A solution of this type enables the user to download an applicable configuration data set and implement it on a specific device. A problem appears when the device breaks down and must be replaced with another one, with a different serial number. In such circumstances, it may happen that the operator makes a mistake and allocates to the new device a configuration varying from that recorded in the device that broke down. This may occur if the database is not updated using modifications previously entered in the device that currently is being replaced. It is also possible that a configuration is loaded that is specified for a device that is identical but connected in another location.

Therefore, it is advisable to find a solution whereby the configuration of a specific device is stored in such a place that it cannot be mistaken for another configuration and that its record is independent of the technical condition of the configured device, so that the record is readable even if the device breaks down or is completely destroyed.

One of available methods used to store information locally is based on NFC (Near Field Communication) tags. The tags are designed as passive circuits and do not need additional power supply to store information. The NFC reader is used to read information stored in the tags. Mobile devices, such as tablet computers, smartphones and other, are equipped with readers of this type. Information is read by physically bringing the reader close to the NFC tag.

There are known solutions for equipping electronic devices with dedicated NFC tags. For example, the US 8498572 patent description discloses a method whereby information from two electrical devices is read using a mobile device and the NFC standard. Information read is shown on the display of the mobile device and the mobile device operator is enabled to select parameters used to connect to an external wireless network, and then through the network interaction is ensured between the two electrical devices. The disclosed method requires that an external wireless network be present, and is not suitable for modifying configurations of electrical devices whose parameters are read from NFC tags.

### SUMMARY OF THE INVENTION

The method according to the present invention consists in that the electrical device is configured using a mobile device placed in the proximity of the electrical device and the steps described below are completed. The electrical device is equipped with an NFC tag device that contains a defined configuration data set of the electrical device. An NFC reader/writer module in the mobile device is activated and the NFC reader/writer module is used to load configuration data from the NFC tag device into the processing module of the mobile device. The read configuration data set is then modified depending on the user's needs in the processing module and thus an updated configuration data set is obtained. The mobile device is then used to establish signal communication with the electrical device and to send updated configuration data from the processing module to the configuration module of the electrical device. Now, the electrical device is configured based on the updated configuration data set. Preferably, the NFC reader/writer module is used to load the configuration data set and a digital device identifier allocated to the electrical device into the processing module. Preferably, the method is used to verify the consistency of the digital device identifier and the set identifier of the electrical device stored in the configuration module, and only if the identifiers are consistent, the updated configuration data set is sent from the processing module to the configuration module. Preferably, the NFC reader/writer module is used to load configuration data and a digital device type identifier allocated to the electrical device into the processing module. Preferably, the configuration data set and the digital device type identifier are loaded into an identifcation module installed in the processing module, and then the identification module is used to read the digital device type identifier and to allocate to it the corresponding device type module embedded in the processing module, and subsequently the configuration data set is sent to the selected device type module where configuration data is modified depending on the user's needs in order to obtain an updated configuration data set. Preferably, the NFC tag device is affixed to the housing of the electrical device.

An advantage of the present invention is fast access to configuration data of a specific industrial device. Information is stored in an NFC tag that is located close to the industrial device, and consequently immediate access to data is ensured without the need to use a central database. The small distance between the NFC tag and the device mitigates the risk of mistakes and of entering a device configuration inconsistent with the location of the device.

Solutions using NFC tags are relatively affordable due to the low cost of NFC tags, and also due to the fact that numerous mobile devices are factory-equipped with data reading/writing modules that are based on the NFC protocol.

### BRIEF DESCRIPTION OF THE DRAWINGS

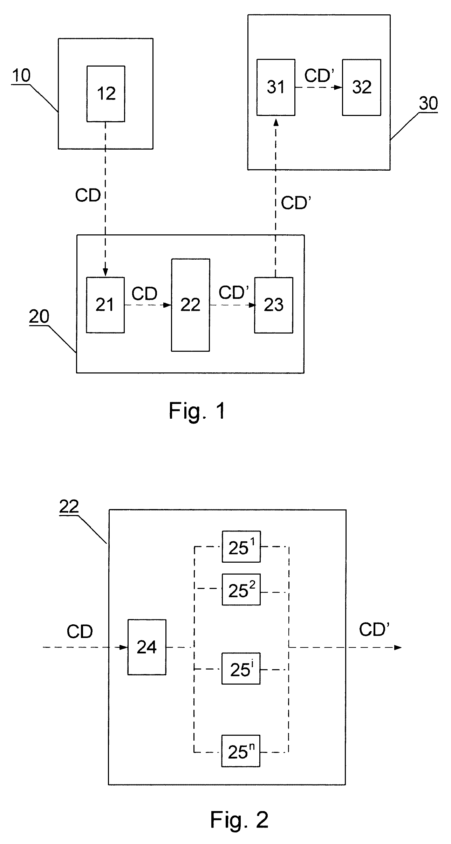

The method according to the present invention is explained by its embodiment, based on a drawing where Fig. 1 represents a diagram of a mobile device wireless-connected to an NFC tag device and an electrical device, and Fig. 2 represents a processing module of a mobile device from Fig. 1.

### DETAILED DESCRIPTION OF THE INVENTION

The method according to the present invention is implemented using a mobile device 20 that establishes wireless communication with an NFC tag device 10 and an electrical device 30, as shown in Fig. 1. A portable computer, tablet or mobile phone, preferably a smartphone, may be used as the mobile device 20, and the electrical device 30 may be represented e.g. by any industrial automation device, such as an electric motor drive or a relay in an electric power distribution network. Both devices are equipped with standard housings and central processing units which is not depicted in the drawing. The NFC tag device 10 is implemented as the known passive electrical device manufactured as a label containing an electrical circuit activated by the electromagnetic field generated by the mobile device 20. The NFC tag is powered by the electromagnetic field generated by the mobile device 20. Advantageously, the NFC tag device 10 is installed in the direct proximity of the electrical device 30 or on the housing of the electrical device 30.

Wireless communication between the mobile device 10 and the NFC tag device is based on the NFC (Near Field Communication) standard. Wireless communication between the mobile device 10 and the electrical device 30 may be established using any method, preferably using the Wi-Fi, Bluetooth or NFC standards. Communication between the mobile device 10 and the electrical device 30 may also be established using a cable connector.

The mobile device 20 is equipped with an NFC reader/writer module 21 that is operated in the NFC standard and is used to establish direct communication with the NFC tag device 10. The NFC tag device 10 is equipped with a data storage module 12, designed to store configuration data set CD of the electrical device 30. Inside the mobile device 20, the NFC reader/writer module 21 is connected to the processing module 22, designed to edit configuration data set CD. The processing module 22 is connected to the communication module 23 of the mobile device 20. The communication module 23 is used to establish direct wireless communication with the electrical device 30. The electrical device 30 is equipped with the communication module 31 of the electrical device 30, designed to establish direct wireless communication with the mobile device 20. A configuration module 32 of the electrical device 30 is connected to the communication module 31. The configuration module 32 is designed to store configuration data set CD and to configure the electrical device 30.

The processing module 22 is equipped with an input identification module 24 that is connected with device type modules 25¹, 25²...25ⁱ...25ⁿ, where n represents a natural number and i a number from the range [1, *n*]. The *n* number of device type modules 25ⁱ depends on the number of types of supported electrical devices 30. The 25¹, 25²...25ⁱ...25ⁿ modules have implemented computer programs dedicated for supporting individual types of electrical devices 30. The operation of all modules of the mobile device 20 is controlled using a central processing unit of the mobile device 20, not depicted in the drawing.

The method according to the present invention is implemented through the following steps:

### Step 1

The mobile device 20 is installed close to the NFC tag device 10, and wireless communication is established between the devices using the NFC reader/writer module 21. The configuration data set CD of the electrical device 30 is read from the NFC tag device and sent to the processing module 22 in the mobile device 20.

### Step 2

Depending on the user's needs, the configuration data set CD is modified by editing it in the processing module 22 in order to obtain a modified configuration data set CD'.

### Step 3

Wireless communication between the mobile device 20 and the electrical device 30 is established using the communication module 23 of the mobile device and the communication module 31 of the electrical device 30. Once communication has been established, the updated configuration data set CD' is sent from the processing module 22 through the communication module 23 of the mobile device 20 to the communication module 31 of the electrical device and further to the configuration module 32 connected to the communication module 31 of the electrical device 30.

### Step 4

The electrical device 30 is configured based on configuration data CD' saved in the configuration module 32.

As an option, the configuration data set CD of the electrical device 30 and a digital device identifier DID are read from the NFC tag device 10 in Step 1. The digital device identifier DID indicates a specific electrical device. For example, the digital device identifier DID is identical with the IP number of the electrical device. In this option, an attempt is made in Step 3 to establish communication with the electrical device 30 based on the digital device identifier DID and if communication is successfully established, an updated configuration data set CD' is transmitted.

In another embodiment option of the present invention, the configuration data set CD of the electrical device 30 and a digital device type identifier TID are read from the NFC tag device 10 in Step 1. The digital device type identifier TID indicates a group of electrical devices that may be configured using the configuration data set CD. In Step 2, the configuration data set CD and the digital device type identifier TID are loaded into the identification module 24 wherein the device type identifier TID is compared with the numbers of device type modules 25ⁱ. When the identifier and a number match, the configuration data set CD is sent to the selected device type module 25ⁱ. In this module, depending on the user's needs, the configuration data set CD is modified by editing it in order to obtain a modified configuration data set CD'.

The method according to the present invention may also be implemented in a reverse process consisting of the following steps:

### Step 1'

Wireless communication with the electrical device 30 is established from the mobile device 20. Communication is established using the communication module 23 of the mobile device 20 and the communication module 31 of the electrical device 30. Once communication has been established, the configuration data set CD stored in the configuration module 32 of the electrical device 30 is sent through the communication module 31 of the electrical device 30 and the communication module 23 of the mobile device 20 to the processing module 22 of the mobile device 20.

### Step 2'

Depending on the user's needs, the configuration data set CD is modified by editing it in the processing module 22 in order to obtain a modified configuration data set CD'.

### Step 3'

The mobiledevice 20 is installed close to the NFC tag device 10, and wireless communication is established between the devices using the NFC reader/writer module 21. The updated configuration data set CD' is sent from the processing module 22 through the NFC reader/writer module 21 to the NFC tag device 10. The updated configuration data set is saved in the data storage module 12 of the NFC tag device.

As an option, the configuration data set CD of the electrical device 30 and the digital device identifier DID assigned to the electrical device 30 or a digital device type identifier TID are read from the configuration module 32 of the electrical device 30 in Step 1'. The digital device identifier DID unambiguously identifies the electrical device 30 from which data has been read. For example, the digital device identifier DID is identical with the IP number of the electrical device 30. The digital device type identifier TID is used to identify a group of similar or identical electrical devices.

The application of the present invention requires that each configurable device in an industrial automation system be equipped with an NFC tag used to store the current configuration of the device. The tag should be affixed directly on the housing of the device or placed in the direct proximity of the device so that its allocation to the indicated device is clear and unambiguous.

## Claims

1. A method of configuring an electrical device (30) using a mobile device (20) situated close to the electrical device (30), **characterised in that**
- the electrical device (30) is equipped with an NFC tag device (10) that contains defined configuration data set (CD) of the electrical device (30);
- an NFC reader/writer module (21) in the mobile device (20) is activated and the NFC reader/writer module (21) is used to load configuration data set (CD) from the NFC tag device (10) into a processing module (22) of the mobile device (20);
- the read configuration data set (CD) is modified depending on the user's needs in the processing module (22) and thus an updated configuration data set (CD') is obtained;
- the mobile device (20) is used to establish signal communication with the electrical device (30) and to send the updated configuration data set (CD') from the processing module (22) to a configuration module (32) of the electrical device (30);
- the electrical device (30) is configured based on the updated configuration data set (CD').

2. A method according to Claim 1, **characterised in that** the NFC reader/writer module (21) is used to load the configuration data set (CD) and a digital device identifier (DID) assigned to the electrical device (30) into the processing module (22)

3. A method according to Claim 2, **characterised in that** the consistency is verified of the digital device identifier (DID) and the set identifier of the electrical device (30) stored in the configuration module (32) and only if the identifiers are consistent, the updated configuration data set (CD) is sent from the processing module (22) to the configuration module (32).

4. A method according to Claim 1, **characterised in that** the NFC reader/writer module (21) is used to load the configuration data set (CD) and a digital device type identifier (TID) assigned to the electrical device (30) into the processing module (22)

5. A method according to Claim 4, **characterised in that** the configuration data set (CD) and the digital device type identifier (TID) are loaded into an identification module (24) installed in the processing module (22), and then the identification module (24) is used to read the digital device type identifier (TID) and to allocate to it the corresponding device type module (25i) embedded in the processing module (22), and then the configuration data set (CD) is sent to the selected device type module (25i) wherein the configuration data set (CD) is modified depending on the user's needs in order to obtain an updated configuration data set (CD').

6. A method according to any of the above claims, **characterised in that** the NFC tag device (10) is affixed on the housing of the electrical device (30).
